# EUROPÄISCHE PATENTSCHRIFT

(11) **EP 1 528 648 B1**
(45) Veröffentlichungstag und Bekanntmachung des Hinweises auf die Patenterteilung: **19.12.2012**
(21) Anmeldenummer: 04011121.3
(22) Anmeldetag: 11.05.2004
(51) Int. Cl.: H02B 1/56, H02B 1/044

(54) **Vorrichtung zum Befestigen eines Kühlgerätes an einem Schaltschrank**
Device for attaching a cooling equipment to an electrical cabinet
Dispositif pour fixer un appareil de refroidissement sur une armoire électrique

(30) Priorität: 31.10.2003 DE 20316880 U; 28.11.2003 DE 20318650 U; 22.04.2004 DE 202004006533 U
(43) Veröffentlichungstag der Anmeldung: 04.05.2005
(73) Patentinhaber: Pfannenberg GmbH, 21035 Hamburg (DE)
(72) Erfinder: Pfannenberg, Andreas, 21035 Hamburg (DE)
(74) Vertreter: Richter Werdermann Gerbaulet Hofmann

(56) Entgegenhaltungen:
- DE-A1- 3 532 169
- DE-A1- 19 700 065
- GB-A- 2 129 480
- GB-A- 2 167 907
- US-A- 2 494 669

## Beschreibung

Die Erfindung betrifft eine Befestigungsvorrichtung zum Befestigen eines ersten Bauteiles, wie Kühlgerät, an einem zweiten Bauteil, wie Schaltschrank, wobei der erste Bauteil in einem quadratischen oder rechteckförmigen Ausschnitt in der Wand des zweiten Bauteiles eingeschoben ist, sowie einen Schaltschrank mit mindestens einem Kühlgerät gemäß den Oberbegriffen der Ansprüche 1 und 8.

Eine Vorrichtung zum Befestigen und zum Verbinden eines ersten Bauteils an einem zweiten Bauteil gemäß dem Oberbegriff des Anspruches 1 offenbart die US-A-2,494,669, nach der eine Vorrichtung zur Befestigung eines mit einem Flansch versehenen Gehäuses an einer Platte, wie einem im Wesentlichen gebogenen Basisteil vorgesehen ist, der über ein paar Arme verfügt und so ausgelegt ist, dass das Gehäuse teilweise umgeben ist, um in die Platte eingreifen zu können. Des Weiteren ist ein in der Mitte angeordneter Federabschnitt vorgesehen, der vom Basisteil absteht. Außerdem sind Sperrmittel zwischen dem Federabschnitt und dem Gehäuse sowie abgerundete Schuhe vorgesehen, die für das gleitende Eingreifen in die Platte an den Enden der Arme ausgebildet sind, wenn das Verbindungsmittel in die sperrende Stellung eingeschnappt wird. Mit dieser Vorrichtung soll ein verbessertes Verbindungselement zur Befestigung eines mit einem Flansch versehenen Gehäuses an einer Platte geschaffen werden, wobei seine Anwendung beispielsweise auf die Befestigung eines Ofenthermometers an einer Ofentür erfolgen soll.

Nach der GB-A-2 167 907 ist ein elektrisches Gehäuse mit einer Befestigungsvorrichtung bekannt, die zur Befestigung eines Gehäuses für elektrische oder elektronische Apparate in einer Öffnung in einer Schalttafel oder Platte vorgesehen ist, wobei das Gehäuse an mindestens zwei gegenüberliegenden Seiten oder Vorsprünge verfügt, die über die Öffnung greifen oder diese überlappen und die mit Hilfe von Halte- oder Sperrelementen zur Schalttafel gedrückt oder an sie gepresst werden, die in entsprechenden Seitenteilen führbar verschiebbar sind. Diese Elemente umfassen einen Führungsteil und einen Halteteil, wobei die Führungsteile in Führungen verschiebbar angeordnet sind, die an oder in den Seitenteilen angeordnet sind und senkrecht zur Schalttafel stehen. Die Halteteile weisen mindestens ein elastisches Element auf, das zur oder an die Seite der Schalttafel gedrückt wird, die von den Vorsprüngen entfernt liegt. Die Halte- und Sperrelemente verfügen über einen Arretierungsmechanismus, mithilfe dessen ein Zurückgleiten der Führungsteile in den Führungen verhindert wird, wenn die Halteteile dorthin geschoben oder dort angedrückt werden.

Die GB-A-2 129 480 beschreibt ein Bauteil und eine Klammer für Steuertafeln, wobei das Bauteil, wie etwa ein schlüsselbetätigter Schalter über einen länglichen Körper verfügt, der an einem Ende mit einem Flansch oder ähnlichem Sperrmittel geformt oder versehen ist, das in eine Platte eingreifen soll, wenn der Körper durch eine Öffnung gesteckt wird. Das Bauteil ist mit einem Bereich geformt oder versehen, der Sperrzähne und eine Klammer in Form eines Rahmenorgans aufweist, das eine Öffnung umgibt, die zum Querschnitt des Körpers des Bauteils im Wesentlichen komplementär ist. Die Klammer verfügt über einen Abschnitt, der quer zum Rahmen verläuft und in einem Tafelabschnitt endet, der mit den Sperrzähnen in Eingriff gelangen kann, wenn sich das Bauteil in Stellung befindet, um das Herausnehmen des Bauteils aus der Tafel zu verhindern. Die Klammer besteht dabei aus Federstahl oder Nylon und kann gebogen sein, um das Bauteil gegen die Tafel zu ziehen.

Nach der DE 35 32 169 A1 ist ein Filter zum Einsatz im Zuluftbereich von elektrischen Geräten bekannt, der ein Halteteil mit einem Frontgitter und einem Rückwandgitter aufweist, zwischen denen ein aus Vlies bestehender Filtereinsatz einsetzbar ist. Das Filter hat an seiner Unterseite ein Schwenklager und mit Abstand dazu am oberen Ende der Seitenbereiche Rastlaschen, die an ihrem vorderen, äußeren Ende von außen handbetätigbare Drucktasten tragen. Außerdem sind noch Anschläge zur Begrenzung der Ausschwenkbewegung vorgesehen, um einen Eingriff ins Geräteinnere bei einem Filtereinsatzwechsel zu verhindern. Das Filter kann ohne Werkzeug und von der Außenseite des Gerätes her montiert werden und ist dann auch für einen Filtereinsatzwechsel von außen her bedienbar.

Einen Filterlüfter für den Einbau in die Wand eines Schaltschrankes beschreibt die DE 197 00 065. Die Montagewand für den Filterlüfter ist mit einer Durchbrechung versehen, in der der Filterlüfter gehalten und befestigt ist, wobei der Filterlüfter aus einem rahmenförmigen Grundgehäuse mit einem gitterförmigen Boden, einer in das Grundgehäuse eingesetzten Filtermatte, einem auf das Grundgehäuse aufgesetzten und die Filtermatte abdeckenden Designrahmen bzw. Abdeckgehäuse und einem an dem Grundgehäuse befestigten Lüftermotor versehen ist, wobei das Grundgehäuse an seinem Umfang mit einer schraubenlosen Schnellbefestigungseinrichtung zur Montage des Filterlüfters in der Durchbrechung der Montagewand versehen ist, wobei der Filterlüfter HF-dicht montierbar ist. Des Weiteren ist der Filterlüfter mit einem mit dem Grundgehäuse verbundenen Metalleinsatz versehen, der aus einem Rahmen mit einem gitterförmigen Boden besteht und der mittels Schraub-, Niet- oder Klemmeinrichtungen mit dem Grundgehäuse verbunden ist. Die an dem Grundgehäuse vorgesehene Schnellbefestigungseinrichtung für den Filterlüfter besteht aus in den vier Eckbereichen des Rahmens des Grundgehäuses ausgebildeten federnd-elastischen Flügelecken. Jede Flügelecke wird von zwei im rechten Winkel zueinanderstehenden, aus den Flächen der im Eckbereich aneinandergrenzenden Rahmenseitenwänden und in Richtung zu den Eckbereichen aus den Ebenen der Rahmenseitenwände nach außen verlaufend herausgestellten, federnd-elastischen, flügelartigen Klemmabschnitten gebildet. Die Flügelecken in den Eckbereichen des Rahmens sind alle gleich ausgebildet. Gleiche Ausbildung weisen auch die flügelartigen Klemmabschnitte der vier Flügelecken auf. Die flügelartigen Klemmabschnitte einer jeden Flügelecke sind derart bemessen, dass zwischen deren oberen Kanten und der die umlaufende Montagewandanlagekante bildenden Wandflächen ein Zwischenraum ausgebildet ist. Die flügelartigen Klemmabschnitte einer jeden Flügelecke sind in den Endbereichen der Seitenwände des Rahmens ausgebildet, so dass jede Seitenwand an ihren Endbereichen zwei flügelartige Klemmabschnitte trägt, wobei diese Klemmabschnitte selbst nicht in den Seitenwänden in Verbindung stehen, sondern an dem Zuschnitt des Rahmens angeformt sind. Die beiden derart ausgebildeten flügelartigen Klemmabschnitte sind in den Eckbereichen des Rahmens in etwa im rechten Winkel zueinanderstehend so angeordnet, dass ihre Seitenkanten unter Freilassung eines geringen Abstandes sich gegenüberliegend sind. Darüber hinaus ist jeder flügelartige Klemmabschnitt so bemessen, dass zwischen seiner oberen Seitenkante und dem umlaufenden Abschnitt mit der Montagewandanlagekante ein Zwischenraum gebildet wird, der in etwa der Materialstärke der Montagewand entspricht. Beide flügelartigen Klemmabschnitte sind durch quer zur Längsrichtung der Seitenwände verlaufende Einschnitte von den Seitenwänden des Rahmens des Grundgehäuses getrennt, so dass die Flügelecken ausgebildet und ein für sich federnd-elastisches Element mit den flügelartigen Klemmabschnitten bilden. Dieser Zwischenraum ist in Richtung zur Seitenkante des flügelartigen Klemmabschnittes konisch sich erweiternd, so dass im Bereich der Seitenkante der Zwischenraum eine geringere Breite gegenüber der Breite des Zwischenraumes im Bereich der Seitenkante aufweist. Dadurch ist es möglich, eine klemmende Halterung an der Montagewand auch dann zu erreichen, wenn die Montagewand unterschiedliche Blechstärken aufweist. Durch die Ausstellung der flügelartigen Klemmabschnitte aus der von den Seitenwänden des Rahmens gebildeten Ebene bilden die Außenflächen des plattenförmigen Zuschnittes der flügelartigen Klemmabschnitte Gleitflächen, wodurch das Einschieben des Grundgehäuses in die Durchbrechung in der Montagewand erleichtert wird.

Es ist Aufgabe der Erfindung, eine Befestigungsvorrichtung der eingangs genannten Art zu schaffen, vermittels der zwei Bauteile, wie z. B. Kühlgerät und Schaltschrank, lösbar miteinander verbindbar sind und die eine hohe Einbaugeschwindigkeit z. B. eines Kühlgerätes in der Wand eines Schaltschrankes ermöglicht, wobei vermittels einer starken Federkraft eine Klemmverbindung geschaffen wird, die ein selbstständiges Lösen der Verbindung unmöglich macht, wobei auch andere lösbare Verbindungselemente zum Einsatz kommen können.

Gelöst wird diese Aufgabe mit einer Befestigungsvorrichtung mit den im Kennzeichen des Anspruches 1 angegebenen Merkmalen und mit einem Schaltschrank mit den im Anspruch 8 angegebenen Merkmalen.

Hiernach besteht die erfindungsgemäße Befestigungsvorrichtung nach Anspruch 1 aus einer bügelförmigen Federklammer, die von einem etwa rechteckförmigen oder eine andere geometrische Formgebung aufweisenden ersten Abschnitt und von zwei sich an den ersten Abschnitt anschließenden, abgewinkelten, federnd-elastischen Federarmen gebildet ist, deren Enden in parallel zu dem ersten Abschnitt verlaufende Auflageflächen bildende Abschnitte übergeht, wobei der erste Abschnitt an einer seiner beiden Längskanten einen rechtwinklig entgegen dem Verlauf der beiden Federarme verlaufenden nach oben abgebogenen zweiten Abschnitt und einen dritten rechtwinklig abgebogenen und parallel zum zweiten Abschnitt in einem in etwa der Stärke des Bleches der Wand des ersten Bauteiles entsprechenden Abstand verlaufenden äußeren Abschnitt aufweist, dessen Abschnittsfläche gegenüber der Fläche des zweiten Abschnittes kleiner bemessen ist, wobei im Befestigungszustand der Federklammer deren dritter äußerer Abschnitt in eine schlitzförmige Durchbrechung in der Wand des ersten Bauteiles einsteckbar ist, so dass die Federklammer mit ihrem außenliegenden abgewinkelten dritten Abschnitt in die schlitzförmige Durchbrechung in der Wand des ersten Bauteiles eingreift und sich an der Innenwandfläche der Wand des ersten Bauteiles abstützt und sich gleichzeitig mit dem abgewinkelten zweiten Abschnitt an der Außenwandfläche der Kühlgerätewand abstützt, wobei sich die Federklammer mit ihren unter Spannung stehenden Federarmen an der Wand des zweiten Bauteiles abstützt, so dass eine klemmriegelartige Befestigung erhalten wird.

Vermittels der Federklammer wird eine klemmriegelspannartige Verbindung zwischen zwei Bauteilen geschaffen, in dem der außenliegende Abschnitt der Federklammer in eine schlitzförmige Durchbrechung in der Wand des ersten Bauteiles, d. h. der Kühlgerätewand eingesteckt wird und sich an der Innenwandfläche der Kühlgerätewand abstützt, wobei gleichzeitig der abgewinkelte zweite Abschnitt der Federklammer sich an der Außenwandfläche der Wand des ersten Bauteiles abstützt, während sich die Federklammer mit ihren Federarmen an der Wand des zweiten Bauteiles, d. h. der Schaltschrankwand, abstützt und dabei unter Spannung steht, da der Abstand der schlitzförmigen Durchbrechung in der Wand des ersten Bauteiles zur Schaltschrankwand des zweiten Bauteiles kleiner ist, als der Abstand des ersten Abschnittes der Federklammer von der von den Auflageflächen bzw. den Enden der Federarme der Federklammer gebildeten Ebene, so dass die Federarme der Federklammer unter Spannung stehen, zumal der in die schlitzförmige Durchbrechung eingesteckt außenliegende dritte Abschnitt sich nicht aus der Durchbrechung lösen kann. Auf diese Weise ist eine werkzeugfreie Montage eines Kühlgerätes oder eines andersartig gestalteten und eine andere Wirkung ausübenden Gerätes möglich, das in den Ausschnitt einer Wand des Schaltschrankes eingeschoben ist, so dass zwei Wände in einem rechten Winkel zueinander stehen, wobei die Federklammer an der einen Wand lösbar vermittels einer Einsteckhalterung befestigt ist, während sich die Federarme, die unter Spannung stehen, sich an der anderen Wand abstützen. Die Federklammer bildet somit eine Befestigungsebene und eine zu dieser im rechten Winkel stehende Auflagenebene. Die Federklammer kann sich nicht selbst lösen, da ihre Federkraft sehr groß ist.

Der Schaltschrank nach Anspruch 8 mit mindestens einem in einen in der Schaltschrankwand vorgesehenen Ausschnitt eingeschobenem Kühlgerät, das mit mindestens einer seiner Wände mit der zur Wand des Kühlgerätes im rechten Winkel stehenden Wand des Schaltschrankes vermittels einer lösbaren Befestigungsvorrichtung verbunden ist, die an den einander zugekehrten bzw. benachbarten Wänden des Kühlgerätes und des Schaltschrankes angreift, wobei die Befestigungsvorrichtung aus einer federnd-elastischen bügelförmigen Federklammer mit zwei Federarmen besteht, wobei zur Befestigung des Kühlgerätes an dem Schaltschrank die Federklammer an der Außenwand des Kühlgerätes lösbar befestigt wird und sich mit seinen Federarmen an der im rechten Winkel zur Außenwand des Kühlgerätes stehende Wandfläche des Schaltschrankes unter Federspannung abstützt, ist erfindungsgemäß in der Weise ausgebildet, dass die bügelförmige Federklammer der Befestigungsvorrichtung von einem rechteckförmigen oder eine andere geometrische Formgebung aufweisenden ersten Abschnitt und von zwei sich an den ersten Abschnitt anschließenden, abgewinkelten, federnd-elastischen Federarmen gebildet wird, deren Enden in parallel zu dem ersten Abschnitt verlaufenden, Auflageflächen bildende Endabschnitte übergeht, wobei der erste Abschnitt an einer seiner beiden Längskanten einen rechtwinklig entgegen dem Verlauf der beiden Federarme verlaufenden nach oben abgebogenen zweiten Abschnitt und einen dritten rechtwinklig abgebogenen und parallel zum zweiten Abschnitt in einem in etwa der Stärke des Bleches der Wand des ersten Bauteiles entsprechenden Abstand verlaufenden äußeren Abschnitt aufweist, dessen Abschnittsfläche gegenüber der Fläche des zweiten äußeren Abschnittes kleiner bemessen ist, wobei im Befestigungszustand der Federklammer deren dritter äußere Abschnitt in eine schlitzförmige Durchbrechung in der Wand des Kühlgerätes einsteckbar ist, so dass die Federklammer mit ihrem außenliegenden abgewinkelten dritten Abschnitt in die schlitzförmige Durchbrechung in der Wand des Kühlgerätes eingreift und sich an der Innenwandfläche der Wand des Kühlgerätes abstützt und sich gleichzeitig mit dem abgewinkelten zweiten Abschnitt an der Außenwandfläche der Wand des Kühlgerätes abstützt, wobei sich die Federklammer mit ihren unter Spannung stehenden Federarmen an der Schaltschrankwand abstützt, so dass eine klemmriegelartige Befestigung erhalten wird.

Vorteilhafte Ausgestaltungen der Erfindung sind Gegenstand der Unteransprüche.

So besteht auch die Möglichkeit, andere Ausgestaltungen des Verbindungselementes zur Befestigung des Kühlgerätes an der Wand eines

Schaltschrankes einzusetzen, so z. B. eine Ausgestaltung nach der das Verbindungselement aus zwei miteinander verriegelbaren oder miteinander verrastbaren Teilen besteht, von denen das eine Teil an der Schaltschrankwand und das andere Teil an der im rechten Winkel zur Schaltschrankwand stehenden Wand des Kühlgerätes befestigt ist.

In der Zeichnung sind Ausführungsbeispiele der Erfindung dargestellt. Es zeigen:
- Fig. 1: eine schaubildliche Ansicht eines Schaltschrankes mit in die Schaltschrankwand eingesetztem Kühlgerät,
- Fig. 2: eine schaubildliche Ansicht einer Federklammer der Vorrichtung zum Befestigen eines Kühlgerätes an einer Schaltschrankwand,
- Fig. 3: eine Seitenansicht der Federklammer,
- Fig. 4: eine Vorderansicht der Federklammer,
- Fig. 5: Ansicht auf die Federklammer im eingesetzten Zustand,
- Fig. 6: eine Seitenansicht der Federklammer in Befestigungsstellung eines Kühlgerätes an einer Schaltschrankwand,
- Fig. 7: in einer schaubildlichen Ansicht den Einsetzvorgang der Federklammer in die schlitzförmige Durchbrechung der Kühlgerätewand in einer ersten Stufe,
- Fig. 8: in einer schaubildlichen Ansicht den Einsetzvorgang der Federklammer in die schlitzförmige Durchbrechung der Kühlgerätewand in einer zweiten Stufe und
- Fig. 9: in einer schaubildlichen Ansicht die Beendigung des Einsetzvorganges der Federklammer im eingespannten Zustand.

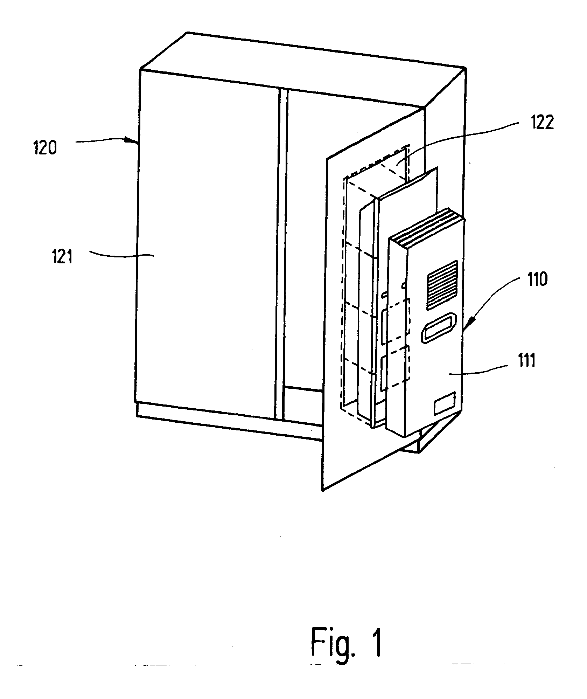

Gemäß der vorliegenden Erfindung ist zur Befestigung eines ersten Bauteiles 110 an einem zweiten Bauteil 120 eine Befestigungsvorrichtung 100 vorgesehen. Bei dem Bauteil 110 handelt es sich beispielsweise um ein Kühlgerät 111 und bei dem zweiten Bauteil 120 um einen Schaltschrank 121, dessen Wand 123 mit einem rechteckförmigen oder quadratischen Ausschnitt 122 versehen ist, um in diesen Wandausschnitt 122 das Kühlgerät 111 einschieben zu können. Im eingeschobenen Zustand wird das Kühlgerät 111 mit seinem Gehäuse 112 an der Schaltschrankwand 123 befestigt (Fig. 1).

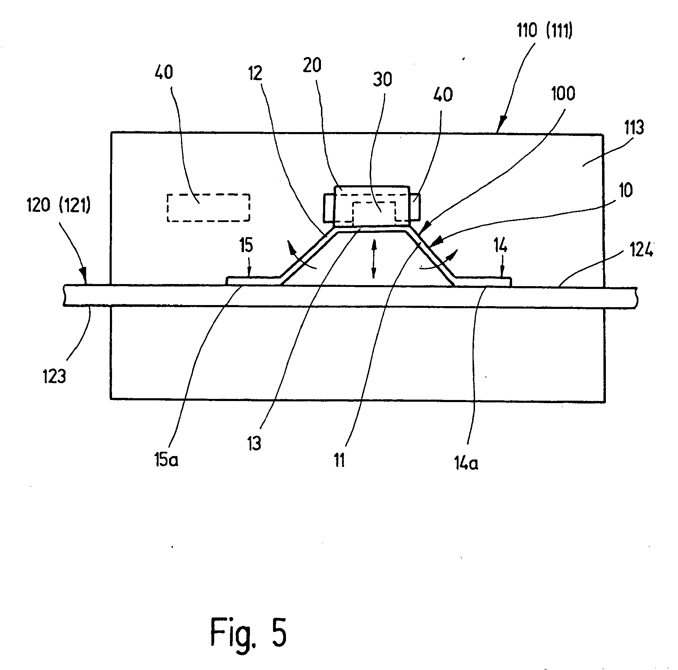

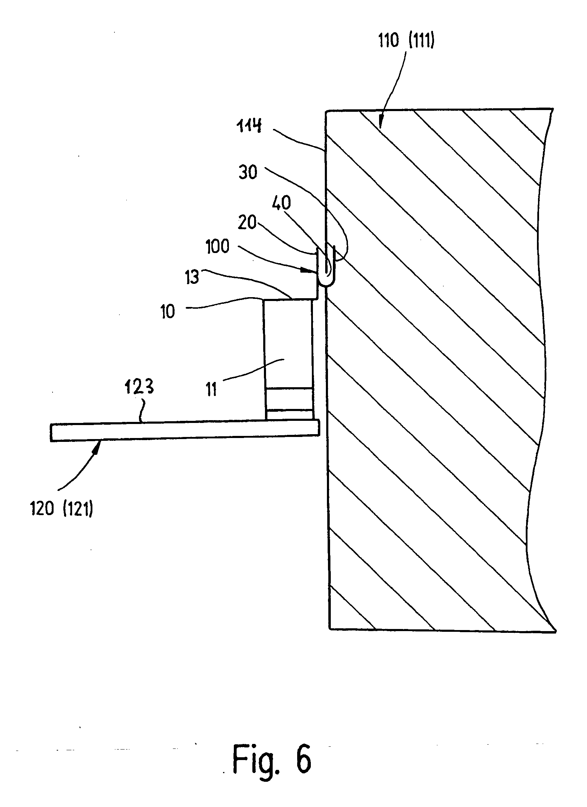

Die Befestigungsvorrichtung 100 besteht aus einer federnd-elastischen bügelförmigen Federklammer 10, insbesondere aus Federstahl, und weist zwei Federarme 11, 12 auf, wobei zur Befestigung des Bauteiles 110 an dem Bauteil 120 die Federklammer 10 an der Wand 114 des Bauteiles 110 bzw. an der Wand des Gehäuses 112 des Kühlgerätes 111 lösbar befestigt ist und sich dabei mit seinen Federarmen 11, 12 an der im rechten Winkel zur Wand 114 des Bauteiles 110 stehenden Wandfläche 124 des Bauteiles 120 unter Federspannung abstützt (Fig. 5 und 6).

Zur Befestigung der beiden Bauteile 110, 120 ist mindestens eine Federklammer 10 vorgesehen.

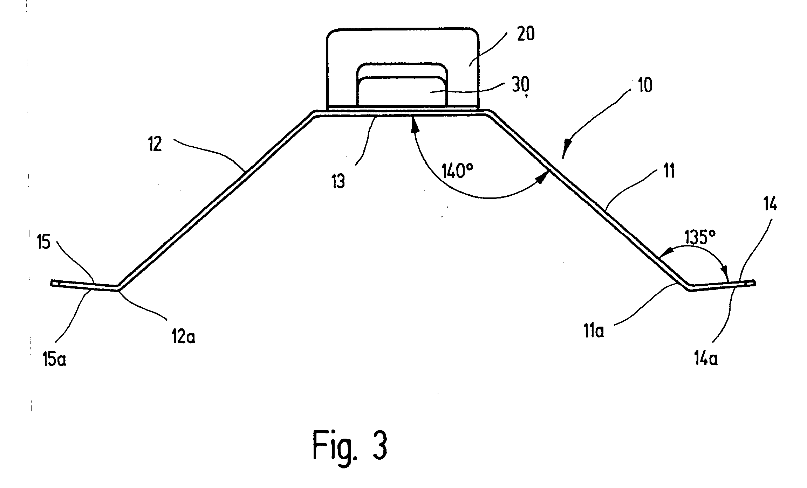

Die Befestigungsvorrichtung 100 besteht aus der bügelförmig ausgebildeten Federklammer 10, die von einem ersten Abschnitt 13 gebildet wird, an den sich Federarme 11, 12 anschließen. Dieser Abschnitt 13 der Federklammer 10 kann eine quadratische oder rechteckförmige Fläche aufweisen. Die Federarme 11, 12 der Federklammer 10 sind zum Abschnitt 13 abgewinkelt, wobei die beiden Federarme 11, 12 in Winkeln von etwa 140° zum Abschnitt 13 der Federklammer 10 stehen (Fig. 3).

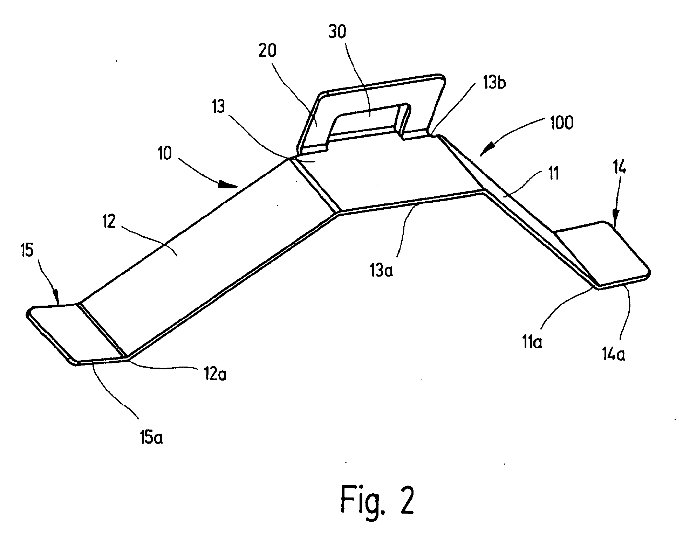

Die Enden 11a, 12a der Federarme 11, 12 der Federklammer 10 gehen in abgewinkelte Endabschnitte 14, 15 über, die Auflageflächen 14a, 15a bilden (Fig. 2). Diese Endabschnitte 14, 15 verlaufen in etwa parallel zu dem Abschnitt 13 der Federklammer 10.

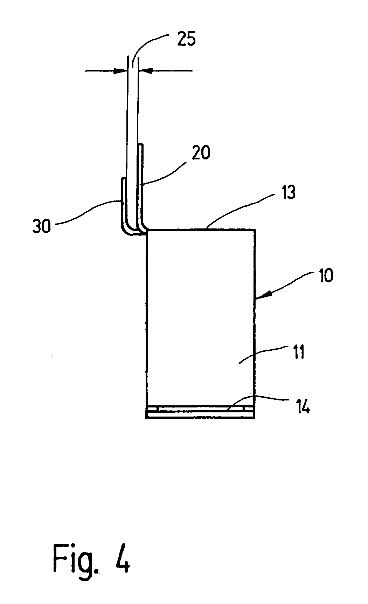

Der Abschnitt 13 der Federklammer 10 weist an einer seiner beiden Längskanten 13a, 13b, z. B. an der Längskante 13b, einen rechtwinklig entgegen dem Verlauf der beiden Federarme 11, 12 verlaufenden nach oben abgebogenen zweiten Abschnitt 20 auf, sowie ferner einen dritten rechtwinklig abgebogenen und parallel zu dem Abschnitt 20 verlaufenden äußeren Abschnitt 30, der in einem Abstand 25 zu dem Abschnitt 20 angeordnet ist, der in etwa der Stärke des Bleches der Wand 114 des Bauteiles 110 entspricht. Des weiteren ist die Abschnittsfläche 20a des Abschnittes 20 gegenüber der Fläche 30a des außenliegenden Abschnittes 30 kleiner bemessen (Fig. 4).

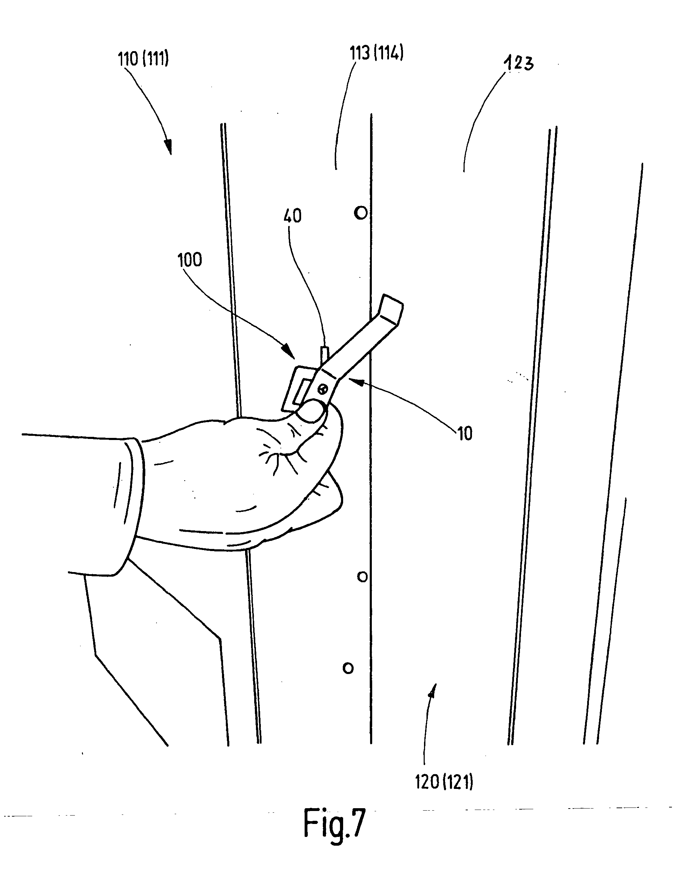

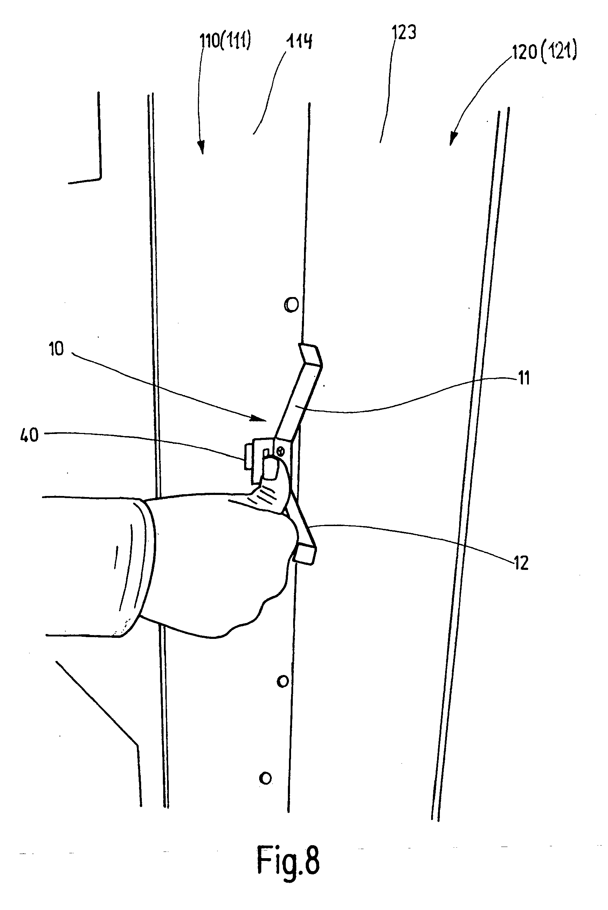

Für die Befestigung der Federklammer 10 an der Außenwandfläche der Wand 114 des Bauteiles 110 bzw. an der Wand des Gehäuses 112 des Kühlgerätes 111 ist in dieser Wand 114 mindestens eine schlitzförmige Durchbrechung 40 vorgesehen, in die zur Befestigung der beiden Bauteile 110, 120 miteinander der außenliegende Abschnitt 30 der Federklammer 10 eingesteckt wird (Fig. 7 und 8). Die Einführung des Abschnittes 30 in die schlitzförmige Durchbrechung 40 in der Wand 114 des Bauteiles 110 erfolgt dann derart, dass die Federklammer 10 mit ihrem außenliegenden Abschnitt 30 in die schlitzförmige Durchbrechung 40 in der Wand 114 des Bauteiles 110 eingreift und sich dabei an der Innenwandfläche der Wand 114 abstützt. Gleichzeitig stützt sich die Federklammer 10 mit dem abgewinkelten Abschnitt 20 an der Außenwandfläche der Wand 114 des Bauteiles 110 ab, wobei sich dann die Federklammer 10 mit ihren unter Spannung stehenden Federarm 11, 12 an der Wand 123 des Bauteiles 120 abstützt, so dass eine klemmriegelartige Befestigung zwischen den beiden Bauteilen 110, 120 erhalten wird.

Um eine sich nicht selbst lösende Verbindung zwischen den beiden Bauteilen 110, 120 zu erhalten, ist der Abstand der schlitzförmigen Durchbrechung 50 in der Wand 114 des Bauteiles 110 zu der Wand 124 des zweiten Bauteiles 120 kleiner als der Abstand des Abschnittes 13 der Federklammer 10 von der von den Auflageflächen 14a, 15a der Federarme 14, 15 der Federklammer 10 gebildeten Ebene E (Fig. 5).

In der Wand 114 des Bauteiles 110 ist mindestens eine schlitzförmige Durchbrechung 40 für die Halterung der Federklammer 10 vorgesehen. Sind mehrere schlitzförmige Durchbrechungen 40 in der Wand 114 vorgesehen, so sind diese in Reihe angeordnet, so dass mehrere Federklammern 10 an der Wand 114 des Bauteiles 110 befestigt werden können und zwar in jeweils den erforderlichen Abständen.

Wie Fig. 3 zeigt, stehen die beiden Federarme 11, 12 der Federklammer 10 in Winkeln von etwa 140° zum Abschnitt 13 der Federklammer, wohingegen die abgewinkelten Endabschnitte 14, 15 der Federarme 11, 12 zu diesen in Winkeln von 135° angeordnet sind.

Um das Einstecken des Abschnittes 20 der Federklammer 10 in die schlitzförmige Durchbrechung 40 in der Wand 114 des Bauteiles 120 zu ermöglichen, weißt der außenliegende Abschnitt 30 der Federklammer 10 gegenüber dem Abschnitt 20 eine Höhe auf, die in etwa der halben Höhe des Abschnittes 20 entspricht.

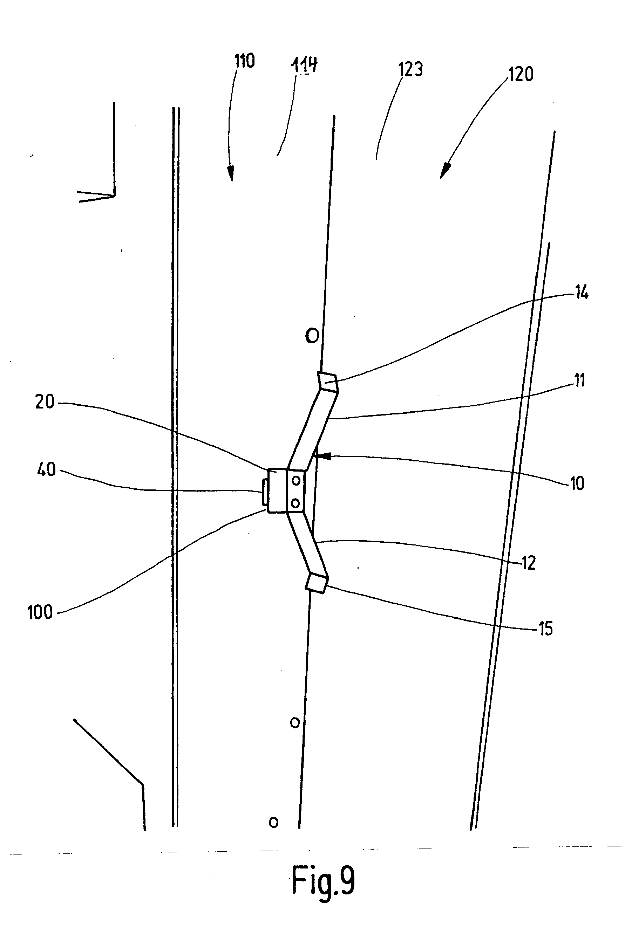

Die Fig. 5 und 6 zeigen die Anordnung einer Federklammer 10 zur Befestigung des Bauteiles 110 an der Wand 123 des Bauteiles 120 bzw. an der Wand des Schaltschrankes 121. Die Anbringung und Befestigung der Federklammer 10 ist in den Fig. 7, 8 und 9 dargestellt. Es wird dabei in der Weise vorgegangen, dass der außenliegende Abschnitt 30 der Federklammer 10 in die schlitzförmige Durchbrechung 40 eingesteckt wird, so dass der Abschnitt 20 der Federklammer 10 auf der einen Seite der Wand und der Abschnitt 30 der Federklammer 10 auf der anderen Seite der Wand zu liegen kommen und sich an den Wandflächen abstützen (Fig. 7 und 8). Vermittels dieser Klemmhalterung ist die Federklammer 10 an der Wand 114 arretiert. Die Befestigung selbst erfolgt durch die unter Spannung stehenden Federarme 11, 12 der Federklammer 10, deren Federarme 11, 12 sich auf der anderen Wand 124 des Bauteiles 120 abstützen (Fig. 9). Die unter Spannung stehende Federklammer 10 ist in Fig. 5 dargestellt.

In gleicher Weise wie ein Kühlgerät in der Wand eines Schaltschrankes vermittels der erfindungsgemäßen Befestigungsvorrichtung 100 befestigt werden kann, können auch andersartig ausgebildete Bauteile miteinander befestigt werden.

Eine weitere Befestigungsart des Kühlgerätes 111 an der Schaltschrankwand 123 besteht darin, dass eine Befestigungsvorrichtung 100 eingesetzt wird, die aus zwei miteinander verriegelbaren oder miteinander verrastbaren Teilen besteht, von denen das eine Teil an der Schaltschrankwand 123 und das andere Teil an der im rechten Winkel zur Schaltschrankwand 123 stehenden Wand 114 des Kühlgerätes 111 befestigt ist. Auch kann eine Klettverschlussverbindung eingesetzt werden, deren Verschlussteile an der Schaltschrankwand 123 und an der Kühlgerätewand 114 befestigt sind. Das Verbindungselement 100 kann auch riegel- oder schiebeförmig oder als Rastelement ausgebildet sein. Wesentlich ist, dass die miteinander in Wirk- bzw. Verschluss- oder Verriegelungsverbindung bringbaren Teile der Befestigungsvorrichtung 100 an den aneinandergrenzenden Wänden des Kühlgerätes und des Schaltschrankes vorgesehen sind.

## Patentansprüche

1. Vorrichtung (100) zum Befestigen und Verbinden eines ersten Bauteiles (110), wie Kühlgerät (111), an einem zweiten Bauteil (120), wie Schaltschrank (121), wobei das erste Bauteil (110) in einen Ausschnitt (122) in der Wand (123) des zweiten Bauteiles (120) eingeschoben ist, wobei die Befestigungsvorrichtung (100) aus einer federnd-elastischen bügelförmigen Federklammer (10) mit zwei Federarmen (11, 12) besteht, wobei zur Befestigung des ersten Bauteiles (110) an dem zweiten Bauteil (120) die Federklammer (10) an der Außenwand (114) des ersten Bauteiles (110) lösbar befestigt wird und sich mit seinen Federarmen (11, 12) an der im rechten Winkel zur Außenwand (114) des ersten Bauteiles (110) stehende Wandfläche (124) des zweiten Bauteiles (120) unter Federspannung abstützt,
**dadurch gekennzeichnet,**
**dass** die bügelförmige Federklammer (10) der Befestigungsvorrichtung (100) von einem rechteckförmigen oder eine andere geometrische Formgebung aufweisenden ersten Abschnitt (13) und von zwei sich an den ersten Abschnitt (13) anschließenden, abgewinkelten, federnd-elastischen Federarmen (11, 12) gebildet ist, deren Enden (119, 129) in parallel zu dem ersten Abschnitt (13) verlaufenden, Auflageflächen (14a, 15a) bildende Endabschnitte (14, 15) übergehen, wobei der erste Abschnitt (13) an einer (13b) seiner beiden Längskanten (13a, 13b) einen rechtwinklig entgegen dem Verlauf der beiden Federarme (11, 12) verlaufenden nach oben abgebogenen zweiten Abschnitt (20) und einen dritten rechtwinklig abgebogenen und parallel zum zweiten Abschnitt (20) in einem in etwa der Stärke des Bleches der Wand (114) des ersten Bauteiles (110) entsprechenden Abstand (25) verlaufenden äußeren Abschnitt (30) aufweist, dessen Abschnittsfläche (20a) gegenüber der Fläche (30a) des zweiten äußeren Abschnittes (30) kleiner bemessen ist, wobei im Befestigungszustand der Federklammer (10) deren dritter äußere Abschnitt (30) in eine schlitzförmige Durchbrechung (40) in der Wand (114) des ersten Bauteiles (110) einsteckbar ist, so dass die Federklammer (10) mit ihrem außenliegenden abgewinkelten dritten Abschnitt (30) in die schlitzförmige Durchbrechung (40) in der Wand (114) des ersten Bauteiles (110) eingreift und sich an der Innenwandfläche der Wand (114) des ersten Bauteiles (110) abstützt und sich gleichzeitig mit dem abgewinkelten zweiten Abschnitt (20) an der Außenwandfläche der Wand (114) des ersten Bauteiles (110) abstützt, wobei sich die Federklammer (10) mit ihren unter Spannung stehenden Federarmen (11, 12) an der Wand (123) des zweiten Bauteiles (120) abstützt, so dass eine klemmriegelartige Befestigung erhalten wird.

2. Vorrichtung nach Anspruch 1,
**dadurch gekennzeichnet,**
**dass** der Abstand der schlitzförmigen Durchbrechung (40) in der Wand (114) des ersten Bauteiles (110) zur Wand (124) des zweiten Bauteiles (120) kleiner ist, als der Abstand des ersten Abschnittes (13) der Federklammer (10) von der von den Auflageflächen (14a, 15a) der Federarme (14, 15) der Federklammer (10) gebildeten Ebene.

3. Vorrichtung nach einem der Ansprüche 1 oder 2,
**dadurch gekennzeichnet,**
**dass** in der Wand (114) des ersten Bauteiles (110) mindestens eine schlitzförmige Durchbrechung (40) vorgesehen ist.

4. Vorrichtung nach einem der Ansprüche 1 bis 3,
**dadurch gekennzeichnet,**
**dass** in der Wand (114) des ersten Bauteiles (110) mehrere in Reihe angeordnete schlitzförmige Durchbrechungen (40) vorgesehen sind.

5. Vorrichtung nach einem der Ansprüche 1 bis 4,
**dadurch gekennzeichnet,**
**dass** die beiden Federarme (11, 12) der Federklammer (10) in Winkeln von etwa 140° zum ersten Abschnitt (13) der Federklammer (10) stehen und die abgewinkelten Endabschnitte (14, 15) der Federarme (11, 12) zu diesen in Winkeln von 135° stehen.

6. Vorrichtung nach einem der Ansprüche 1 bis 5,
**dadurch gekennzeichnet,**
**dass** der außenliegende dritte Abschnitt (30) der Federklammer (10) gegenüber dem zweiten Abschnitt (20) eine Höhe aufweist, die in etwa der halben Höhe des zweiten Abschnittes (20) entspricht.

7. Vorrichtung nach einem der Ansprüche 1 bis 6,
**dadurch gekennzeichnet,**
**dass** die Federklammer (10) aus federnd-elastischem Material besteht.

8. Schaltschrank (121) mit mindestens einem in einen in der Schaltschrankwand (123) vorgesehenen Ausschnitt (122) eingeschobenen Kühlgerät (111), das mit mindestens einer seiner Wände (114) mit der zur Wand (114) des Kühlgerätes (111) im rechten Winkel stehenden Wand (124) des Schaltschrankes (121) vermittels einer lösbaren Befestigungsvorrichtung (100) verbunden ist, die an den einander zugekehrten bzw. benachbarten Wänden (114, 124) des Kühlgerätes (111) und des Schaltschrankes (121) angreift, wobei die Befestigungsvorrichtung (100) aus einer federnd-elastischen bügelförmigen Federklammer (10) mit zwei Federarmen (11, 12) besteht, wobei zur Befestigung des Kühlgerätes (111) an dem Schaltschrank (121) die Federklammer (10) an der Außenwand (114) des Kühlgerätes (111) lösbar befestigt wird und sich mit seinen Federarmen (11, 12) an der im rechten Winkel zur Außenwand (114) des Kühlgerätes (111) stehende Wandfläche (124) des Schaltschrankes (121) unter Federspannung abstützt,
**dadurch gekennzeichnet,**
**dass** die bügelförmige Federklammer (10) der Befestigungsvorrichtung (100) von einem rechteckförmigen oder eine andere geometrische Formgebung aufweisenden ersten Abschnitt (13) und von zwei sich an den ersten Abschnitt (13) anschließenden, abgewinkelten, federnd-elastischen Federarmen (11, 12) gebildet wird, deren Enden (119, 129) in parallel zu dem ersten Abschnitt (13) verlaufenden, Auflageflächen (14a, 15a) bildende Endabschnitte (14, 15) übergeht, wobei der erste Abschnitt (13) an einer (13b) seiner beiden Längskanten (13a, 13b) einen rechtwinklig entgegen dem Verlauf der beiden Federarme (11, 12) verlaufenden nach oben abgebogenen zweiten Abschnitt (20) und einen dritten rechtwinklig abgebogenen und parallel zum zweiten Abschnitt (20) in einem in etwa der Stärke des Bleches der Wand (114) des ersten Bauteiles (110) entsprechenden Abstand (25) verlaufenden äußeren Abschnitt (30) aufweist, dessen Abschnittsfläche (20a) gegenüber der Fläche (30a) des zweiten äußeren Abschnittes (30) kleiner bemessen ist, wobei im Befestigungszustand der Federklammer (10) deren dritter äußere Abschnitt (30) in eine schlitzförmige Durchbrechung (40) in der Wand (114) des Kühlgerätes (111) einsteckbar ist, so dass die Federklammer (10) mit ihrem außenliegenden abgewinkelten dritten Abschnitt (30) in die schlitzförmige Durchbrechung (40) in der Wand (114) des Kühlgerätes (111) eingreift und sich an der Innenwandfläche der Wand (114) des Kühlgerätes (111) abstützt und sich gleichzeitig mit dem abgewinkelten zweiten Abschnitt (20) an der Außenwandfläche der Wand (114) des Kühlgerätes (111) abstützt, wobei sich die Federklammer (10) mit ihren unter Spannung stehenden Federarmen (11, 12) an der Schaltschrankwand (123) abstützt, so dass eine klemmriegelartige Befestigung erhalten wird.

9. Schaltschrank nach Anspruch 8,
**dadurch gekennzeichnet,**
**dass** der Abstand der schlitzförmigen Durchbrechung (40) in der Wand (114) des Kühlgerätes (111) zur Schaltschrankwand (123) kleiner ist, als der Abstand des ersten Abschnittes (13) der Federklammer (10) von der von den Auflageflächen (14a, 15a) der Federarme (14, 15) der Federklammer (10) gebildeten Ebene.

10. Schaltschrank nach einem der Ansprüche 8 oder 9,
**dadurch gekennzeichnet,**
**dass** in der Wand (114) des Kühlgerätes (111) mindestens eine schlitzförmige Durchbrechung (40) vorgesehen ist.

11. Schaltschrank nach einem der Ansprüche 8 bis 10,
**dadurch gekennzeichnet,**
**dass** in der Wand (114) des Kühlgerätes (111) mehrere in Reihe angeordnete schlitzförmige Durchbrechungen (40) vorgesehen sind.

12. Schaltschrank nach einem der Ansprüche 8 bis 11,
**dadurch gekennzeichnet,**
**dass** die beiden Federarme (11, 12) der Federklammer (10) in Winkeln von etwa 140° zum ersten Abschnitt (13) der Federklammer (10) stehen und die abgewinkelten Endabschnitte (14, 15) der Federarme (11, 12) zu diesen in Winkeln von 135° stehen.

13. Schaltschrank nach einem der Ansprüche 8 bis 12,
**dadurch gekennzeichnet,**
**dass** der außenliegende dritte Abschnitt (30) der Federklammer (10) gegenüber dem zweiten Abschnitt (20) eine Höhe aufweist, die in etwa der halben Höhe des zweiten Abschnittes (20) entspricht.

14. Schaltschrank nach einem der Ansprüche 8 bis 13,
**dadurch gekennzeichnet,**
**dass** die Federklammer (10) aus Federstahl besteht.

15. Schaltschrank nach Anspruch 8,
**dadurch gekennzeichnet,**
**dass** die Befestigungsvorrichtung (100) aus zwei miteinander verriegelbaren oder miteinander verrastbaren Teilen besteht, von denen das eine Teil an der Schaltschrankwand (123) und das andere Teil an der im rechten Winkel zur Schaltschrankwand (123) stehenden Wand (114) des Kühlgerätes (111) befestigt ist.

## Claims

1. A device (100) for attaching and connecting a first component (110) such as a cooling equipment (111) to a second component (120) such as an electrical cabinet (121), wherein the first component (110) is inserted in a cutout (122) in the wall (123) of the second component (120), wherein the attachment device (100) consists of a spring-elastic bow-shaped spring clip (10) with two spring arms (11, 12), wherein the spring clip (10), in order to attach the first component (110) to the second component (120), is detachably attached to the outer wall (114) of the first component (110) and is supported under spring tension with its spring arms (11, 12) against the wall surface (124) of the second component (120), the wall surface (124) of the second component (120) extending at right angles to the outer wall (114) of the first component,
**characterised in that**
the bow-shaped spring clip (10) of the attachment device (100) is formed of a first section (13) comprising a rectangular or other geometrical shape and two angled spring-elastic spring arms (11, 12) adjoining the first section (13), wherein the ends (119, 129) of the spring arms (11, 12) change to become end sections (14, 15) extending parallel to the first section (13) and forming supporting surfaces (14a, 15a), wherein the first section (13), at one (13b) of its two longitudinal edges (13a, 13b), comprises an upwardly angled second section (20) extending at right angles relative to the extension of the two spring arms (11, 12) and a third rectangularly angled outer section (30) extending parallel to the second section (20) at a distance (25) roughly corresponding to the thickness of the metal sheet of wall (114) of the first component (110), wherein the section surface (20a) of the third outer section (30) is dimensionally smaller than the surface (30a) of the second outer section (30), wherein, when the spring clip (10) is attached, its third outer section (30) is insertable into a slot-shaped breakthrough (40) in the wall (114) of the first component (110), such that the spring clip (10), with its angled outer third section (30), engages in the slot-shaped breakthrough (40) in the wall (114) of the first component (110) and is supported against the inner wall surface of the wall (114) of the first component (110) and is simultaneously supported with the angled second section (20) against the outer wall surface of the wall (114) of the first component (110), wherein the spring clip (10) is supported with its tensioned spring arms (11, 12) against the wall (123) of the second component (120), thereby obtaining a clamping-tie-bar-type attachment.

2. The device according to claim 1, **characterised in that** the distance of the slot-shaped breakthrough (40) in the wall (114) of the first component (110) to the wall (124) of the second component (120) is smaller than the distance of the first section (13) of spring clip (10) to the plane formed by the supporting surfaces (14a, 15a) of the spring arms (14, 15) of the spring clip (10).

3. The device according to one of claims 1 or 2, **characterised in that** at least one slot-shaped breakthrough (40) is provided in the wall (114) of the first component (110).

4. The device according to one of claims 1 to 3, **characterised in that** several in series arranged slot-shaped breakthroughs (40) are provided in the wall (114) of the first component (110).

5. The device according to one of claims 1 to 4, **characterised in that** the two spring arms (11, 12) of the spring clip (10) are arranged at angles of approximately 140° to the first section (13) of the spring clip (10) and **in that** the angled end sections (14, 15) of the spring arms (11, 12) are arranged at angles of 135° to these.

6. The device according to one of claims 1 to 5, **characterised in that** the outer third section (30) of the spring clip (10) comprises a height relative to the second section (20), which roughly corresponds to half the height of the second section (20).

7. The device according to one of claims 1 to 6, **characterised in that** the spring clip (10) consists of spring-elastic material.

8. A control cabinet (121) with at least one cooling equipment (111) inserted into a cutout (122) provided in the control cabinet wall (123), said cooling equipment being connected on at least one of its walls (114) with the wall (124) of the control cabinet (121) extending at right angle to the wall (114) of the cooling equipment (111) by means of a detachable attachment device (100) which engages with the walls (114, 124) of the cooling equipment (111) and the control cabinet (121), the walls (114, 124) facing each other or being adjacent to each other, wherein the attachment device (100) consists of a spring-elastic bow-shaped spring clip (10) with two spring arms (11, 12), wherein, in order to attach the cooling equipment (111) to the control cabinet (121), the spring clip (10) is detachably attached to the outer wall (114) of the cooling equipment (111) and is supported under spring tension with its spring arms (11, 12) against the wall surface (124) of the control cabinet (121) extending at right angles to the outer wall (114) of the cooling equipment (111),
**characterised in that**
the bow-shaped spring clip (10) of the attachment device (100) is formed of a first section (13) comprising a rectangular or other geometrical shape and two angled spring-elastic spring arms (11, 12) adjoining the first section (13), wherein the ends (119, 129) of the spring arms (11, 12) change to become end sections (14, 15) extending parallel to the first section (13) and forming supporting surfaces (14a, 15a), wherein the first section (13), at one (13b) of its two longitudinal edges (13a, 13b), comprises an upwardly angled second section (20) extending at right angles relative to the extension of the two spring arms (11, 12) and a third rectangularly angled outer section (30) extending parallel to the second section (20) at a distance (25) roughly corresponding to the thickness of the metal sheet of wall (114) of the first component (110), wherein the section surface (20a) of the third outer section (30) is dimensionally smaller than the surface (30a) of the second outer section (30), wherein, when the spring clip (10) is attached, its third outer section (30) is insertable into a slot-shaped breakthrough (40) in the wall (114) of the first component (110), such that the spring clip (10), with its angled outer third section (30), engages in the slot-shaped breakthrough (40) in the wall (114) of the first component (110) and is supported against the inner wall surface of the wall (114) of the first component (110) and is simultaneously supported with the angled second section (20) against the outer wall surface of the wall (114) of the first component (110), wherein the spring clip (10) is supported with its tensioned spring arms (11, 12) against the wall (123) of the second component (120), thereby obtaining a clamping-tie-bar-type attachment.

9. The control cabinet according to claim 8, **characterised in that** the distance of the slot-shaped breakthrough (40) in the wall (114) of cooling equipment (111) to the control cabinet wall (123) is smaller than the distance of the first section (13) of the spring clip (10) to the plane formed by the supporting surfaces (14a, 15a) of the spring arms (11, 12) of the spring clip (10).

10. The control cabinet according to one of claims 8 or 9, **characterised in that** at least one slot-shaped breakthrough (40) is provided in the wall (114) of the cooling equipment (111).

11. The control cabinet according to one of claims 8 to 10, **characterised in that** several in series arranged slot-shaped breakthroughs (40) are provided in the wall (114) of the first component (110).

12. The control cabinet according to one of claims 8 to 11, **characterised in that** the two spring arms (11, 12) of the spring clip (10) are arranged at angles of approximately 140° to the first section (13) of the spring clip (10) and **in that** the angled end sections (14, 15) of the spring arms (11, 12) are arranged at angles of 135° to these.

13. The control cabinet according to one of claims 8 to 12, **characterised in that** the outer third section (30) of the spring clip (10) comprises a height relative to the second section (20), which roughly corresponds to half the height of the second section (20).

14. The control cabinet according to one of claims 8 to 13, **characterised in that** the spring clip (10) consists of spring steel.

15. The control cabinet according to claim 8, **characterised in that** the attachment device (100) consists of two interlockable parts of which one part is attached to the control cabinet wall (123) and the other part is attached to the wall (114) of the cooling equipment (111) which extends at right angles to the control cabinet wall (123).

## Revendications

1. Dispositif (100) pour la fixation et le raccordement d'une première pièce de construction (110), telle qu'un appareil de refroidissement (111), sur une deuxième pièce de construction (120), telle qu'une armoire de commande (121), dans lequel la première pièce de construction (110) est insérée dans une découpe (122) dans la paroi (123) de la deuxième pièce de construction (120), dans lequel le dispositif de fixation (100) est constitué d'une pince élastique (10) en forme d'étrier à élasticité de ressort, avec deux bras élastiques (11, 12), dans lequel, pour la fixation de la première pièce de construction (110) sur la deuxième pièce de construction (120), la pince élastique (10) est fixée de façon détachable à la paroi extérieure (114) de la première pièce de construction (110), tout en s'appuyant avec ses bras élastiques (11, 12) sous tension de ressort sur la surface de paroi (124) de la deuxième pièce de construction (120), qui s'étend en angle droit par rapport à la paroi extérieure (114) de la première pièce de construction (110),
**caractérisé en ce que**
la pince élastique (10) en forme d'étrier du dispositif de fixation (100) est formée par une première section (13) de forme rectangulaire ou présentant une autre forme géométrique, et par deux bras élastiques (11, 12) coudés, à élasticité de ressort, embrancheant à la première section (13), dont les extrémités (119, 129) débouchent sur des sections terminales (14, 15) formant des surfaces d'appui (14a, 15a) et s'étendant parallèlement à la première section (13), dans lequel la première section (13) comporte, sur l'une (13b) de ses deux arêtes longitudinales (13a, 13b), une deuxième section (20) courbée vers le haut et s'étendant en angle droit par rapport à l'étendue des deux bras élastiques (11, 12), ainsi qu'une troisième section extérieure (30) courbée en angle droit et s'étendant parallèlement à la deuxième section (20), en respectant un espacement (25) correspondant approximativement à l'épaisseur de tôle de la paroi (114) de la première pièce de construction (110), dont la surface de section (20a) est plus petite que la surface (30a) de la deuxième section extérieure (30), dans lequel, lorsque la pince élastique (10) se trouve dans l'état fixé, la troisième section extérieure (30) de celle-ci peut être insérée dans une brèche en forme de fente (40) dans la paroi (114) de la première pièce de construction (110), de sorte que la pince élastique (10) s'engage, avec sa troisième section (30) extérieure coudée, dans la brèche en forme de fente (40) dans la paroi (114) de la première pièce de construction (110), et s'appuie sur la surface de paroi intérieure de la paroi (114) de la première pièce de construction (110), tout en s'appuyant simultanément, avec sa deuxième section coudée (20), sur la surface de paroi extérieure de la paroi (114) de la première pièce de construction (110), et la pince élastique (10) s'appuyant, avec ses bras élastiques (11, 12) sous tension, sur la paroi (123) de la deuxième pièce de construction (120), de manière à réaliser une fixation du genre barre de serrage.

2. Dispositif selon la revendication 1,
**caractérisé en ce que**
l'espacement entre la brèche en forme de fente (40) dans la paroi (114) de la première pièce de construction (110) et la paroi (124) de la deuxième pièce de construction (120) est inférieur à l'espacement entre la première section (13) de la pince élastique (10) et le plan formé par les surfaces d'appui (14a, 15a) des bras élastiques (14, 15) de la pince élastique (10).

3. Dispositif selon l'une des revendications 1 ou 2,
**caractérisé en ce que**
il est prévu au moins une brèche en forme de fente (40) dans la paroi (114) de la première pièce de construction (110).

4. Dispositif selon l'une des revendications 1 à 3,
**caractérisé en ce que**
plusieurs brèches en forme de fentes (40) agencées en rangée sont prévues dans la paroi (114) de la première pièce de construction (110).

5. Dispositif selon l'une des revendications 1 à 4,
**caractérisé en ce que**
les deux bras élastiques (11, 12) de la pince élastique (10) s'étendent en formant des angles d'environ 140° par rapport à la première section (13) de la pince élastique (10), tandis que les sections terminales (14, 15) coudées des bras élastiques (11, 12) forment des angles de 135° par rapport à ceux-ci.

6. Dispositif selon l'une des revendications 1 à 5,
**caractérisé en ce que**
par rapport à la deuxième section (20), la troisième section extérieure (30) de la pince élastique (10) présente une hauteur correspondant approximativement à la moitié de la hauteur de la deuxième section (20).

7. Dispositif selon l'une des revendications 1 à 6,
**caractérisé en ce que**
la pince élastique (10) est constituée d'un matériau à élasticité de ressort.

8. Armoire de commande (121), avec au moins un appareil de refroidissement (111) inséré dans une section (122) prévue dans la paroi d'armoire (123) et relié, par au moins l'une de ses parois (114), à la paroi (124) de l'armoire de commande (121) formant un angle droit avec la paroi (114) de l'appareil de refroidissement (111), au moyen d'un dispositif de fixation (100) détachable s'engageant avec les parois (114, 124) tournées l'une vers l'autre ou voisines de l'appareil de refroidissement (111) et de l'armoire de commande (121), dans laquelle le dispositif de fixation (100) est constitué d'une pince élastique (10) en forme d'étrier à élasticité de ressort, avec deux bras élastiques (11, 12), dans laquelle, pour la fixation de l'appareil de refroidissement (111) sur l'armoire de commande (121), la pince élastique (10) est fixée de façon détachable sur la paroi extérieure (114) de l'appareil de refroidissement (111), tout en s'appuyant avec ses bras élastiques (11, 12) sous tension de ressort sur la surface de paroi (124) de l'armoire de commande (121) qui forme un angle droit par rapport à la paroi extérieure (114) de l'appareil de refroidissement (111),
**caractérisée en ce que**
la pince élastique (10) en forme d'étrier du dispositif de fixation (100) est formée par une première section (13) de forme rectangulaire ou présentant une autre forme géométrique, et par deux bras élastiques (11, 12) coudés, à élasticité de ressort, embrancheant à la première section (13), dont les extrémités (119, 129) débouchent sur des sections terminales (14, 15) formant des surfaces d'appui (14a, 15a) et s'étendant parallèlement à la première section (13), où la première section (13) comporte, sur l'une (13b) de ses deux arêtes longitudinales (13a, 13b), une deuxième section (20) courbée vers le haut et s'étendant en angle droit par rapport à l'étendue des deux bras élastiques (11, 12), ainsi qu'une troisième section extérieure (30) courbée en angle droit et s'étendant parallèlement à la deuxième section (20), en respectant un espacement (25) correspondant approximativement à l'épaisseur de tôle de la paroi (114) de la première pièce de construction (110), dont la surface de section (20a) est plus petite que la surface (30a) de la deuxième section extérieure (30), où, lorsque la pince élastique (10) se trouve dans l'état fixé, la troisième section extérieure (30) de celle-ci peut être insérée dans une brèche en forme de fente (40) dans la paroi (114) de l'appareil de refroidissement (111), de sorte que la pince élastique (10) s'engage, avec sa troisième section extérieure (30) coudée, dans la brèche en forme de fente (40) dans la paroi (114) de l'appareil de refroidissement (111), et s'appuie sur la surface de paroi intérieure de la paroi (114) de l'appareil de refroidissement (111), tout en s'appuyant simultanément, avec sa deuxième section coudée (20), sur la surface de paroi extérieure de la paroi (114) de l'appareil de refroidissement (111), et la pince élastique (10) s'appuyant, avec ses bras élastiques (11, 12) sous tension, sur la paroi (123) de la deuxième pièce de construction (120), de manière à réaliser une fixation du genre barre de serrage.

9. Armoire de commande selon la revendication 8,
**caractérisée en ce que**
l'espacement entre la brèche en forme de fente (40) dans la paroi (114) de l'appareil de refroidissement (111) et la paroi (123) de l'armoire de commande est inférieur à l'espacement entre la première section (13) de la pince élastique (10) et le plan formé par les surfaces d'appui (14a, 15a) des bras élastiques (14, 15) de la pince élastique (10).

10. Armoire de commande selon l'une des revendications 8 ou 9,
**caractérisée en ce que**
il est prévu au moins une brèche en forme de fente (40) dans la paroi (114) de l'appareil de refroidissement (111).

11. Armoire de commande selon l'une des revendications 8 à 10,
**caractérisée en ce que**
plusieurs brèches en forme de fentes (40) agencées en rangée sont prévues dans la paroi (114) de l'appareil de refroidissement (111).

12. Armoire de commande selon l'une des revendications 8 à 11,
**caractérisée en ce que**
les deux bras élastiques (11, 12) de la pince élastique (10) s'étendent en formant des angles d'environ 140° par rapport à la première section (13) de la pince élastique (10), tandis que les sections terminales (14, 15) coudées des bras élastiques (11, 12) forment des angles de 135° par rapport à ceux-ci.

13. Armoire de commande selon l'une des revendications 8 à 12,
**caractérisée en ce que**
par rapport à la deuxième section (20), la troisième section extérieure (30) de la pince élastique (10) présente une hauteur correspondant approximativement à la moitié de la hauteur de la deuxième section (20).

14. Armoire de commande selon l'une des revendications 8 à 13,
**caractérisée en ce que**
la pince élastique (10) est constituée d'acier à ressort.

15. Armoire de commande selon la revendication 8,
**caractérisée en ce que**
le dispositif de fixation (100) est constitué de deux pièces susceptibles d'être enclenchées ou verrouillées l'une avec l'autre, parmi lesquelles l'une des pièces est fixée à la paroi d'armoire de commande (123), tandis que l'autre pièce est fixée à la paroi (114) de l'appareil de refroidissement (111) formant un angle droit par rapport à la paroi d'armoire de commande (123).
